# EUROPÄISCHE PATENTSCHRIFT

(11) **EP 3 015 242 B1**
(45) Veröffentlichungstag und Bekanntmachung des Hinweises auf die Patenterteilung: **22.01.2020**
(21) Anmeldenummer: 15191566.7
(22) Anmeldetag: 27.10.2015
(51) Int. Cl.: B29C 45/16

(54) **SPRITZGIESSMASCHINE**
INJECTION MOULDING MACHINE
MACHINE A MOULER PAR INJECTION

(30) Priorität: 28.10.2014 DE 102014015989
(43) Veröffentlichungstag der Anmeldung: 04.05.2016
(73) Patentinhaber: Ferromatik Milacron GmbH, 79331 Teningen (DE)
(72) Erfinder: Thümen, Thorsten, 64625 Bensheim (DE)
(74) Vertreter: Grättinger Möhring von Poschinger Patentanwälte Partnerschaft mbB

(56) Entgegenhaltungen:
- DE-A1- 10 214 466
- DE-A1-102004 057 164
- US-A1- 2006 159 793
- DASSOW J: "FUER ALLE FAELLE GERUESTET. TECHNOLOGIEFUEHRERSCHAFT DURCH MEHRKOMPONENTENTECHNIK", KUNSTOFFE, CARL HANSER VERLAG, MUNCHEN, DE, Bd. 92, Nr. 9, 1. September 2002 (2002-09-01), Seiten 105-109, XP001125593, ISSN: 0023-5563

## Beschreibung

Die vorliegende Erfindung betrifft eine in Zwei- oder Dreiplattenbauweise ausgeführte Spritzgießmaschine mit einer ersten, feststehenden Formaufspannplatte samt einem darauf aufgespannten ersten Teilwerkzeug und einer zweiten, längs der Maschinenachse bewegbaren Formaufspannplatte samt einem darauf aufgespannten zweiten Teilwerkzeug, einer auf die zweite Formaufspannplatte wirkenden Schließeinheit, einer ersten Spritzeinheit, die dazu ausgelegt ist, durch einen Düsendurchbruch in der ersten Formaufspannplatte hindurch in das auf dieser aufgespannte Teilwerkzeug einzuspritzen, und mindestens einer zur gemeinsamen Lageveränderung mit der bewegbaren Formaufspannplatte geeigneten zweiten Spritzeinheit. Insbesondere betrifft die vorliegende Erfindung eine Spritzgießmaschine nach dem Oberbegriff des Anspruchs 1.

Spritzgießmaschinen der vorstehend genannten Art, wie sie zum sog. Mehrkomponenten-Spritzgießen geeignet sind, sind in verschiedensten Ausführungen bekannt. Im Falle ihrer Ausführung in Dreiplattenbauweise umfassen die betreffenden Spritzgießmaschinen weiterhin auch noch eine sog. Endplatte, an der sich jeweils die Schließeinheit abstützt. Zum einschlägigen Stand der Technik zählen beispielsweise die GB 2300142 A, DE 102004042857 A1, US 4243362 A, WO 2005/007381 A2 und EP 1048431 A1. Die Möglichkeit, die mindestens eine zweite Spritzeinheit gemeinsam mit der bewegbaren Formaufspannplatte längs der Maschinenachse zu verfahren, erlaubt, dass die mindestens eine zweite Spritzeinheit mit ihrer Düse ständig an dem auf der bewegbaren Formaufspannplatte aufgespannten zweiten Teilwerkzeug anliegt, was sich günstig auswirkt auf die Herstellung hochwertiger Spritzgießerzeugnisse mit kurzen Zykluszeiten. Insoweit unterscheiden sich gattungsgemäße Spritzgießmaschinen substantiell von solchen, bei denen die mindestens eine zweite Spritzeinheit erst nach dem Schließen der Form auf das zweite Teilwerkzeug aufsetzbar ist (vgl. beispielsweise DE 10 2004 057 164 A1).

Eine gattungsgemäße, dem Oberbegriff des Anspruchs 1 entsprechende Spritzgießmaschine ist aus der US 2006/0159793 A1 bekannt. Bei dieser Spritzgießmaschine umfasst die Tragstruktur für die zweite Spritzeinheit, welche hinsichtlich ihrer Bewegung längs der Maschinenachse mit der bewegbaren Formaufspannplatte koppelbar ist, zwei sich parallel zur Maschinenachse erstreckende Schienen. Diese sind an ihrem einem Ende - über eine Distanzplatte - mit der feststehenden Formaufspannplatte fest verbunden; und die gegenüberliegenden Enden der Schienen sind in Schiebelagern längsverschiebbar aufgenommen, die ihrerseits fest mit der bewegbaren Formaufspannplatte verbunden sind. Eine ein Zwischenstück bildende Platte, die eine gegenüber der feststehenden Formaufspannplatte oder der bewegbaren Formaufspannplatte größere Breite in Richtung der Maschinenachse aufweisen kann, ist direkt auf den Schienen befestigbar. Die Schienen verteilen das Gewicht und die aus der Torsion der zweiten Spritzeinheit resultierenden Kräfte auf die beiden Formaufspannplatten und sorgen für eine wirksamere Abstützung der zweiten Spritzeinheit als im Falle von deren direkter Befestigung an einer der beiden Formaufspannplatten.

Im Lichte des durch die vorstehenden Veröffentlichungen dokumentierten Standes der Technik liegt der vorliegenden Erfindung die Aufgabe zugrunde, eine Spritzgießmaschine der eingangs dargelegten Art bereitzustellen, die sich durch ein besonders hohes Maß an Flexibilität hinsichtlich des Einsatzes für unterschiedlichste Anwendungen auszeichnet.

Gelöst wird diese Aufgabenstellung gemäß der vorliegenden Erfindung durch die in Anspruch 1 angegebene Spritzgießmaschine. Demnach weist bei einer - aus der gattungsbildenden US 2006/0159793 A1 bekannten - Abstützung der mindestens einen zweiten Spritzeinheit, bei der eine Tragstruktur einen sich einerseits an der ersten Formaufspannplatte und andererseits an der zweiten Formaufspannplatte und/oder einer ggf. vorgesehen Endplatte abstützenden Rahmen und einen auf diesem längs einer Linearführung parallel zur Maschinenachse verschiebbar gelagerten, die mindestens eine zweite Spitzeinheit aufnehmenden Schlitten umfasst und eine der Abstützungen der Tragstruktur eine feste Fixierung des Rahmens an der betreffenden Platte beinhaltet, wohingegen die mindestens eine weitere Abstützung das Rahmens an der zugeordneten Platte als Schiebelager ausgeführt ist, die Linearführung in Richtung der Maschinenachse eine solche Erstreckung auf, dass die mindestens eine zweite Spritzeinheit wahlweise in eine an dem ersten Teilwerkzeug oder dem zweiten Teilwerkzeug anliegende Position bringbar ist; und es sind Mittel zur Lagesicherung der mindestens einen zweiten Spritzeinheit in ihrer an dem ersten oder aber dem zweiten Teilwerkzeug anliegenden Position vorgesehen. Die erfindungsgemäße Spritzgießmaschine zeichnet sich somit, mit anderen Worten, durch eine spezifische der Abstützung der mindestens einen zweiten Spritzeinheit, die nach etablierter Maschinentechnik zum Einspritzen von Schmelze in das auf der zweiten Formaufspannplatte aufgespannte zweite Teilwerkzeug und zum gemeinsamen Verfahren mit der zweiten Formaufspannplatte geeignet ist, mittels einer hierfür vorgesehenen Tragstruktur aus. Es erstreckt sich nämlich eine Linearführung, über die ein die mindestens eine zweite Spritzeinheit aufnehmender Schlitten in Längsrichtung der Maschine, d.h. parallel zur Maschinenachse verschiebbar auf einem Rahmen gelagert ist, welcher sich seinerseits einerseits an der ersten Formaufspannplatte und andererseits an der zweiten Formaufspannplatte und/oder einer ggf. vorgesehen Endplatte abstützt, so weit in Richtung auf die Düsenplatte, dass die mindestens eine zweite Spritzeinheit in eine an dem ersten Teilwerkzeug anliegende Position bringbar ist. Je nach ihrer Positionierung ist die mindestens eine zweite Spritzeinheit wahlweise - über hierfür vorgesehene Mittel zur Lagesicherung - in ihrer an dem ersten oder aber dem zweiten Teilwerkzeug anliegenden Position fixierbar. Im Ergebnis lässt sich bei erfindungsgemäßen Spritzgießmaschinen aufgrund dieser Ausführung der Trageinrichtung mittels der mindestens einen zweiten Spritzeinheit wahlweise auch in ein auf der ersten Formaufspannplatte (sog. Düsenplatte) aufgespanntes erstes Teilwerkzeug einspritzen, was den Anwendungsbereich einer Spritzgießmaschine in ganz erheblicher Weise erweitert. Die Mittel zur Lagesicherung der mindestens einen zweiten Spritzeinheit können dabei insbesondere eine direkte kraftübertragende Koppelung der betreffenden zweiten Spritzeinheit an der Formaufspannplatte, auf der das jeweilige Teilwerkzeug aufgespannt ist, umfassen. Sie greifen somit je nach dem Betriebsmodus der mindestens einen zweiten Spritzeinheit an der zweiten oder aber an der ersten Formaufspannplatte (bzw. mit der betreffenden Platte fest verbundenen Gegenlagern) an. Der Rahmen der Tragstruktur, auf dem der Schlitten verschiebbar gelagert ist, ist dabei an einer der Platten, auf der er sich abstützt, fixiert. Die Abstützung des Rahmens an der mindestens einen weiteren Platte ist demgegenüber als Schiebelager ausgeführt.

In bevorzugter Weiterbildung der vorliegenden Erfindung ist dabei die mindestens eine als Schiebelager ausgeführte Abstützung des Rahmens der Tragstruktur an der betreffenden Platte zur Übertragung von quer zur Maschinenachse gerichteten Kräfte ausgeführt. Auf diese Weise kann nicht nur der Rahmen zur Aussteifung der gesamten Maschinenstruktur beitragen. Vielmehr besteht, als Folge hiervon, auch ein größerer Gestaltungsspielraum hinsichtlich der Ausführung der Teilwerkzeuge, in welche die mindestens eine zweite Spritzeinheit einspritzen kann, sowie der Anordnung und Orientierung der mindestens einen zweiten Spritzeinheit. Diese kann insbesondere auch in einer solchen Orientierung angeordnet werden, dass auf die Tragstruktur Querkräfte ausgeübt werden.

Gemäß einer anderen bevorzugten Weiterbildung der Erfindung ist der Rahmen der Tragstruktur an der ersten Formaufspannplatte fixiert. Dies ist bei typischen Konstellationen des Gesamtsystems von Vorteil im Hinblick auf die statischen Verhältnisse und die Lastabtragung in ein Maschinenbett bzw. Fundament. Besonders bevorzugt ist in diesem Fall die Spritzgießmaschine als eine - eine Endplatte aufweisende - Dreiplattenmaschine ausgeführt, wobei sich der Rahmen der Tragstruktur sowohl an der zweiten Formaufspannplatte als auch an der Endplatte über ein Schiebelager abstützt. Zur Vermeidung von Zwängungen ist dabei allerdings bevorzugt nur eine der beiden als Schiebelager ausgeführten Abstützungen zur Übertragung von quer zur Maschinenachse gerichteten Kräften ausgeführt, besonders bevorzugt die Abstützung des Rahmens an der zweiten Formaufspannplatte.

Die vorstehend erläuterte doppelte Schieblager-Abstützung des Rahmens ist indessen bei Dreiplattenmaschine keinesfalls zwingend. Vielmehr kann sich beispielsweise im Einzelfall als vorteilhaft erweisen, wenn sich der Rahmen der Tragstruktur allein an der Endplatte, nicht hingegen an der zweiten Formaufspannplatte über ein Schiebelager abstützt, wobei diese Abstützung des Rahmens an der Endplatte zur Übertragung von vertikalen Lasten sowie von quer zur Maschinenachse gerichteten Kräften ausgeführt ist. Oder der Rahmen der Tragstruktur stützt sich zur Übertragung vertikaler Lasten entweder nur auf der Endplatte oder nur auf der zweiten Formaufspannlatte ab, wobei diese Abstützung zur Übertragung von quer zur Maschinenachse gerichteten Kräften nicht geeignet ist und an der jeweils anderen Platte eine zur Übertragung von quer zur Maschinenachse gerichteten Kräften geeignete Abstützung erfolgt.

Statt der Fixierung des Rahmens der Tragstruktur an der Düsenplatte kommt - gemäß einer alternativen bevorzugten Weiterbildung der vorliegenden Erfindung - auch eine Fixierung des Rahmens an der zweiten Formaufspannplatte oder, im Falle einer Dreiplattenmaschine, der Endplatte in Betracht. In diesem Falle ist die - als Schiebelager ausgeführte - Abstützung des Rahmens an der ersten Formaufspannplatte besonders bevorzugt zur Übertragung vertikaler Lasten sowie von quer zur Maschinenachse gerichteten Kräften ausgeführt.

Gemäß einer wiederum anderen bevorzugten Weiterbildung der erfindungsgemäßen Spritzmaschine erstreckt sich die Linearführung, auf welcher der Schlitten verschiebbar gelagert ist, in Richtung weg von der ersten Formaufspannplatte um ein solches Maß, dass die mindestens eine zweite Spritzeinheit in eine oberhalb der Schließeinheit liegende Position bringbar ist. Insbesondere dann, wenn die mindestens eine zweite Spritzeinheit so geneigt ist, dass ihre Düse in Richtung auf die erste Formaufspannplatte orientiert ist, erleichtert dies die Umrüstung der Spritzgießmaschine unter Wechsel des Werkzeugs bei einem Übergang von einer Anwendung zu einer anderen.

Eine nochmals andere bevorzugte Weiterbildung der erfindungsgemäßen Spritzmaschine zeichnet sich dadurch aus, dass der Rahmen der Tragstruktur in Richtung auf die erste Spritzeinheit über die feststehende Formaufspannplatte hinaus übersteht. Dies gilt insbesondere dann, wenn die mindestens eine zweite Spritzeinheit so geneigt ist, dass ihre Düse in Richtung auf die zweite Formaufspannplatte orientiert ist; denn in diesem Fall erlaubt die Ausführung der Tragstruktur mit einem in Richtung auf die erste Spritzeinheit über die feststehende Formaufspannplatte hinaus überstehenden Rahmen, dass die mindestens eine zweite Spritzeinheit über die erste Spritzeinheit verfahren werden kann, beispielsweise für einen Werkzeugwechsel, der in diesem Falle mit besonders geringem Aufwand durchführbar ist. Der vorstehend beschriebene Überstand des Rahmens ist dabei besonders bevorzugt auf einer Stützstruktur abgestützt, welche sich ihrerseits an einem Maschinengestell oder (seitlich neben oder hinter der ersten Spritzeinheit) direkt auf dem Untergrund (Fundament) abstützt.

Ist die mindestens eine zweite Spritzeinheit, wie vorstehend bereits angeklungen ist, zur ersten oder aber zur zweiten Formaufspannplatte hin geneigt, so schießt ihre Achse mit der Maschinenachse bevorzugt einen Winkel zwischen 20° und 60°, besonders bevorzugt zwischen 30° und 50° ein. Dies stellt bei typischen Konstellationen einen im Hinblick auf die dynamischen und statischen Verhältnisse optimalen Kompromisswert dar.

Zum Verschieben des Schlittens auf dem Rahmen ist, gemäß einer anderen bevorzugten Weiterbildung der Erfindung, ein eigenständiger auf den Schlitten wirkender Verfahrantrieb vorgesehen, der unabhängig von der Schließeinheit ist. Dies gestattet die von der zweiten Formaufspannplatte entkoppelte Bewegung des Schlittens auf dem Rahmen der Tragstruktur mit der Möglichkeit einer frei wählbaren verfahrenstechnischen Optimierung der Bewegungsprofile.

Mit ganz besonderem Vorteil lassen sich die durch die vorliegende Erfindung bereitgestellten Möglichkeiten bei einer Spritzgießmaschine nutzen, bei der zwischen der ersten Formaufspannplatte und der zweiten Formaufspannplatte eine längs der Maschinenachse verschiebbare Wendeeinheit mit mindestens zwei weiteren Teilwerkzeugen vorgesehen ist. Entsprechendes gilt für sonstige zwischen dem ersten und dem zweiten Teilwerkzeug vorgesehene weitere Teilwerkzeuge, beispielsweise im Falle eines Etagenwerkzeugs. Dabei sind besonders bevorzugt weiterhin Mittel zur Lagesicherung der mindestens einen zweiten Spritzeinheit in einer mit ihrer Düse an einem der weiteren Teilwerkzeuge anliegenden Position vorgesehen. Im Falle einer Wendeeinheit greifen diese Mittel an einem Formhälftenträger, der an mindestens einem Trägerblock drehbar gelagert ist und auf den mindestens zwei weitere Teilwerkzeuge aufgespannt sind, oder an einem drehbar gelagerten Werkzeugblock, in den die weiteren Teilwerkzeuge integriert sind, an. Die Wendeeinheit und die mindestens eine zweite Spritzeinheit können auf diese Weise eine mechanisch gekoppelte Einheit bilden, auf die ein gemeinsamer Verfahrantrieb wirkt. Ein von dem Verfahrantrieb der Wendeeinheit unabhängiger, eigenständig auf den Schlitten wirkender Verfahrantrieb kann bei einer solchen Verkoppelung der mindestens einen zweiten Spritzeinheit mit der Wendeeinheit funktionslos geschaltet werden. Entsprechendes gilt für die Realisierung der Lagesicherung der mindestens einen zweiten Spritzeinheit in einer an einem der weiteren Teilwerkzeuge anliegenden Position im Falle eines Etagenwerkzeugs oder dergleichen.

Ein Größtmaß an Flexibilität hinsichtlich des Einsatzes der erfindungsgemäßen Spritzgießmaschine lässt sich erreichen, wenn diese zwei in Tandemanordnung ausgeführte zweite Spritzeinheiten aufweist.

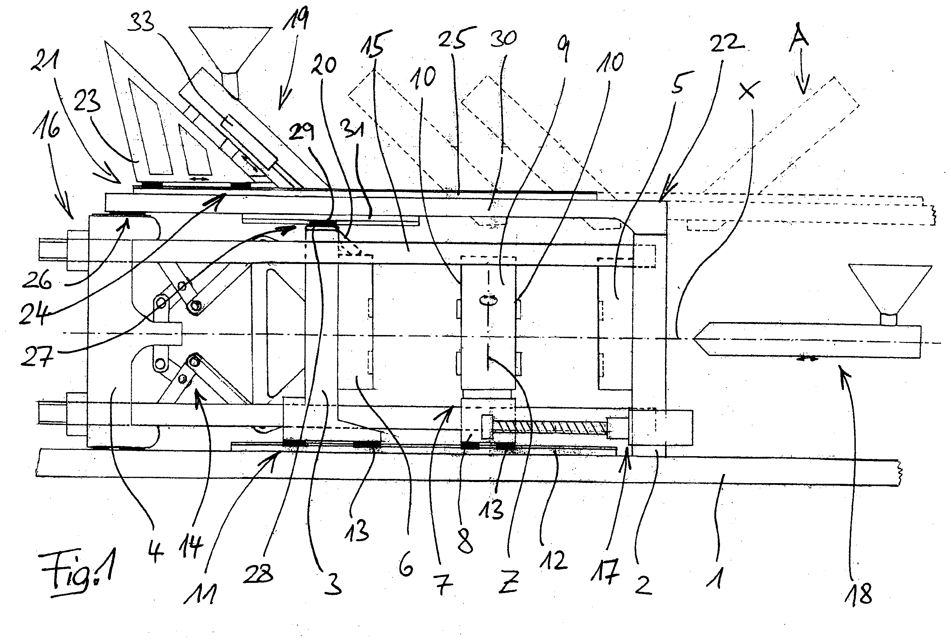

Im Folgenden wird die vorliegende Erfindung anhand eines in der Zeichnung veranschaulichten bevorzugten Ausführungsbeispiels näher erläutert. Dabei zeigt
- Fig. 1: die Spritzgießmaschine in teilweise schematischer Seitenansicht,
- Fig. 2: in einem Vertikalschnitt einen Ausschnitt (ohne zweites Teilwerkzeug) bei einem ersten Betriebsmodus und
- Fig. 3: in Draufsicht einen Ausschnitt (ohne erstes Teilwerkzeug) bei einem zweiten Betriebsmodus.

Die in der Zeichnung illustrierte Spritzgießmaschine ist in Dreiplattenbauweise ausgeführt und umfasst demgemäß ein Maschinenbett 1 und drei sich darauf abstützende Platten, nämlich eine erste, feststehende Formaufspannplatte 2, eine zweite, längs der Maschinenachse X bewegbare Formaufspannplatte 3 sowie eine Endplatte 4. Auf der feststehenden Formaufspannplatte 2 ist ein erstes Teilwerkzeug 5 und auf der bewegbaren Formaufspannplatte 3 ist ein zweites Teilwerkzeug 6 aufgespannt. Zwischen der feststehenden und der bewegbaren Formaufspannplatte ist eine - ebenfalls längs der Maschinenachse X bewegbare - Wendeeinheit 7 angeordnet. Diese umfasst einen auf einem Trägerblock 8 um die vertikale Achse Z drehbar gelagerten Werkzeugblock 9 mit zwei weiteren Teilwerkzeugen 10, welche - bei geschlossenem Werkzeug - zum Zusammenwirken mit dem ersten und dem zweiten Teilwerkzeug 5 bzw. 6 eingerichtet sind. Der längs der Maschinenachse X verschiebbaren Abstützung der bewegbaren Formaufspannplatte 3 sowie der Wendeeinheit 7 auf dem Maschinenbett 1 dienen Linearführungen 11 mit auf dem Maschinenbett 1 fixierten Führungsschienen 12 und an der bewegbaren Formaufspannplatte 3 bzw. dem Trägerblock 8 der Wendeeinheit 7 angeordneten Gleitschuhen 13.

Auf die zweite Formaufspannplatte 3 wirkt eine sich an der Endplatte 4 abstützende Schließeinheit 14. Zur Anpassung der Spritzgießmaschine an unterschiedlich dimensionierte Werkzeuge stützt sich die Endplatte 4 längs der Maschinenachse X verschiebbar auf dem Maschinenbett 1 ab. Dementsprechend sind auch die vier Holme 15, die sich zwischen der ortsfest auf dem Maschinenbett 1 fixierten feststehende Formaufspannplatte 2 und der Endplatte 4 erstrecken und an der feststehenden Formaufspannplatte 2 fixiert sind, mit der Endplatte 4 über eine Formhöhenverstelleinrichtung 16 verbunden. Zur von der bewegbaren Formaufspannplatte 3 unabhängigen Verschiebung der Wendeeinheit 7 ist dieser ein gesonderter Verstellantrieb 17 zugeordnet, der sich an der feststehenden Formaufspannplatte 2 abstützt.

Der feststehenden Formaufspannplatte 2 ist erste Spritzeinheit 18 zugeordnet, die dazu ausgelegt ist, durch einen Düsendurchbruch in der ersten Formaufspannplatte 2 hindurch in das auf dieser aufgespannte erste Teilwerkzeug 5 einzuspritzen.

In dem vorstehend dargelegten Umfang entspricht die in der Zeichnung veranschaulichte Spritzgießmaschine dem hinlänglich bekannten Stand der Technik, so dass es weiterer Erläuterungen nicht bedarf. Dies gilt insbesondere auch für Details, auf die es für die vorliegende Erfindung nicht ankommt, wie beispielsweise Details der Ausführung der Lagerung bzw. Abstützung der bewegbaren Formaufspannplatte 3 und der Wendeeinheit 7 auf dem Maschinenbett 1 sowie ggf. deren Führung auf den Holmen 15, die Ausführung der Schließeinheit 14, etc.

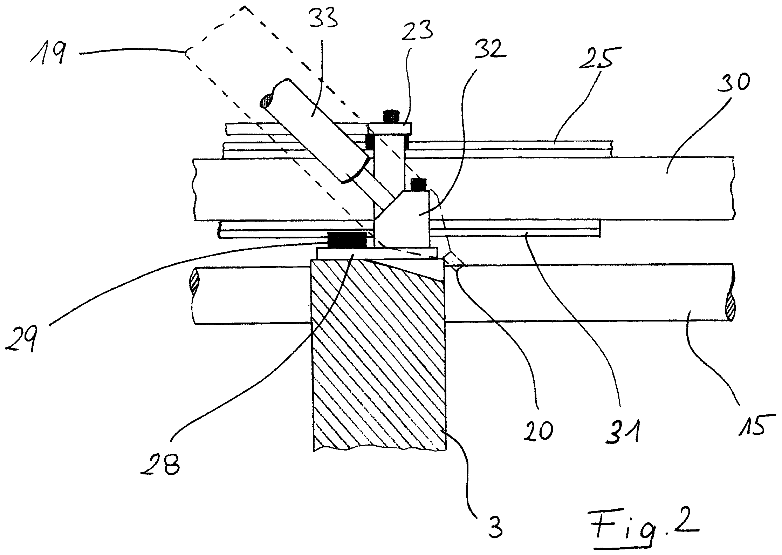

Die Spritzgießmaschine gemäß dem in der Zeichnung veranschaulichten Ausführungsbeispiel umfasst weiterhin eine zweite - in Fig. 2 zur besseren Veranschaulichung der übrigen Teile nur strichliert angedeutete - Spritzeinheit 19. Diese ist in dem Sinne lageveränderbar, dass sie sich - in einem zum Einspritzen in das auf die bewegbare Formaufspannplatte 3 aufgespannte zweite Teilwerkzeug 6 ausgelegten ersten Betriebsmodus der Spritzgießmaschine - gemeinsam mit der bewegbare Formaufspannplatte 3, mit ihrer Düse 20 an dem auf dieser aufgespannten zweiten Teilwerkzeug 6 anliegend, längs der Maschinenachse X verfahren lässt.

Hierzu ist eine der Abstützung der zweiten Spritzeinheit 19 dienende Tragstruktur 21 vorgesehen, welche einen Rahmen 22 und einen auf diesem parallel zur Maschinenachse X verschiebbar gelagerten Schlitten 23 umfasst. Die zweite Spitzeinheit 19 ist dabei von dem Schlitten 23 aufgenommen. Dieser stützt sich über zwei an dem Rahmen 22 fixierte, Linearführungen 24 zugeordnete Führungsschienen 25 an dem Rahmen 22 ab. Der Rahmen 22 stützt sich seinerseits an den drei Platten ab. Mit der Düsenplatte 2 ist er dabei fest verbunden. Die Abstützungen an den beiden weiteren Platten sind indessen als Schiebeführungen ausgeführt. Die der Endplatte 4 zugeordnete Schiebeführung 26 ist (zumindest primär) zur Übertragung vertikaler Lasten geeignet, wohingegen die der bewegbaren Formaufspannplatte 3 zugeordnete Schiebeführung 27 (zumindest primär) zur Übertragung von seitwärts, quer zur Maschinenachse X gerichteten Horizontalkräften geeignet und ausgeführt ist. Hierzu sind mit der bewegbaren Formaufspannplatte 3 an deren oberen Randbereich Führungsplatten 28 fest verbunden, auf denen Führungsblöcke 29 angeordnet sind, welche mit an den Längsträgern 30 des Rahmens 22 angeordneten Führungsschienen 31 zusammenwirken.

Um die zweite Spritzeinheit 19 - in dem ersten Betriebsmodus der Spritzgießmaschine - hinsichtlich ihrer Lage bzw. Positionierung relativ zum zweiten Teilwerkzeug 6 so zu sichern, dass sie sich mit ihrer Düse 20 an letzterem anliegend gemeinsam mit der bewegbaren Formaufspannplatte 3 verfahren lässt, sind an dem Schlitten 23 zwei Verriegelungsblöcke 32 angeordnet. Diese nehmen jeweils einen Riegelmechanismus auf, welcher eine Verriegelung des betreffenden Verriegelungsblocks 32 mit der zugeordneten, mit der bewegbaren Formaufspannplatte 3 verbundenen Führungsplatte 28 ermöglicht. An den Verriegelungsblöcken 32 stützen sich auch die beiden Linearantriebe 33 ab, mittels derer die zweite Spritzeinheit 19 auf das zweite Teilwerkzeug 6 aufgesetzt bzw. von diesem abgehoben werden kann.

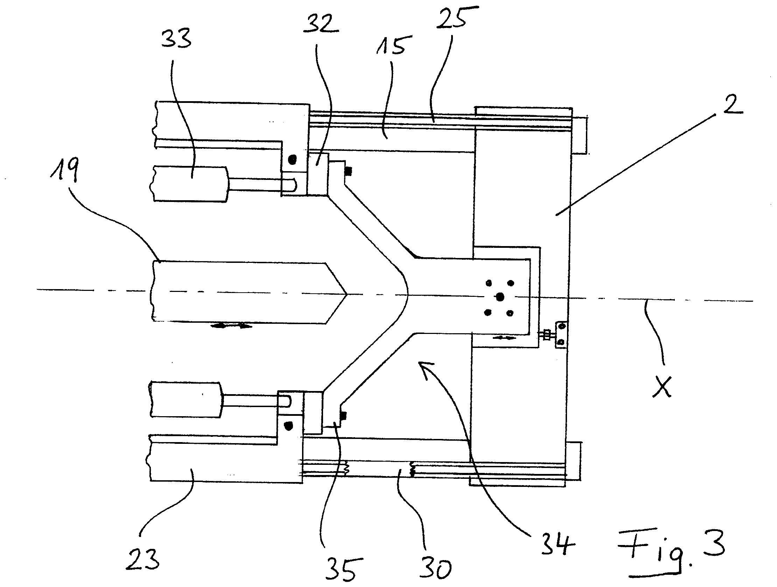

Die auf dem Rahmen 22 angeordneten Führungsschienen 25 der Linearführungen weisen eine solche Erstreckung auf, dass die zweite Spritzeinheit 19 - in einem zweiten Betriebsmodus der Spritzgießmaschine - in eine mit ihrer Düse 20 an dem ersten Teilwerkzeug 5 anliegende Position bringbar ist (vgl. Fig. 3). Um die zweite Spritzeinheit 19 - in dem zweiten Betriebsmodus der Spritzgießmaschine - so zu sichern, dass mit ihrer Düse 20 an dem ersten Teilwerkzeug 5 anliegt, ist mit der Düsenplatte 2 (an deren oberem Randbereich) ein Widerlager 34 fest verbunden. Dieses umfasst zwei Riegelplatten 35, an denen die beiden Verriegelungsblöcke 32 des Schlittens 23 verriegelbar sind.

In einem dritten Betriebsmodus der Spritzgießmaschine ist die zweite Spritzeinheit 19 in einer an einem der beiden weiteren Teilwerkzeuge 10 der Wendeeinheit 7 (s.o) anliegenden Position fixierbar. Hierzu sind an dem Werkzeugblock 9 der Wendeeinheit 7 - nicht veranschaulichte - Widerlager für die Verriegelungsblöcke 32 des Schlittens 23 angeordnet.

Bei dem gezeigten Ausführungsbeispiel ist die zweite Spritzeinheit 19 geneigt angeordnet, und zwar dergestalt, dass die Düse 20 der zweiten Spritzeinheit 19 in Richtung auf die erste Formaufspannplatte 2 orientiert ist. Weiterhin erstrecken sich die Führungsschienen 25 bis über die Schießeinheit 14, so dass der Schlitten 23 mit der zweiten Spritzeinheit 19 in eine oberhalb der Schließeinheit 14 liegende Position bringbar ist.

Allerdings ist auch, wie bei "A" mit unterbrochenen Linien angedeutet, eine Neigung der zweiten Spritzeinheit in entgegengesetzter Richtung möglich. In diesem Falle steht, wie ebenfalls mit unterbrochenen Linien angedeutet, der Rahmen 22 bevorzugt in Richtung auf die erste Spritzeinheit 18 über die feststehende Formaufspannplatte 2 hinaus über.

## Patentansprüche

1. Spritzgießmaschine in Zwei- oder Dreiplattenbauweise mit einer ersten, feststehenden Formaufspannplatte (2) samt einem darauf aufgespannten ersten Teilwerkzeug (5) und einer zweiten, längs der Maschinenachse (X) bewegbaren Formaufspannplatte (3) samt einem darauf aufgespannten zweiten Teilwerkzeug (6), einer auf die zweite Formaufspannplatte (3) wirkenden Schließeinheit (14), einer ersten Spritzeinheit (18), die dazu ausgelegt ist, durch einen Düsendurchbruch in der ersten Formaufspannplatte (2) hindurch in das auf dieser aufgespannte Teilwerkzeug (5) einzuspritzen, und mindestens einer zur gemeinsamen Lageveränderung mit der bewegbaren Formaufspannplatte (3) geeigneten zweiten Spritzeinheit (19), wobei eine der Abstützung der mindestens einen zweiten Spritzeinheit (19) dienende Tragstruktur (21) einen sich einerseits an der ersten Formaufspannplatte (2) und andererseits an der zweiten Formaufspannplatte (3) und/oder einer ggf. vorgesehen Endplatte (4) abstützenden Rahmen (22) und einen auf diesem längs einer Linearführung (24) parallel zur Maschinenachse (X) verschiebbar gelagerten, die mindestens eine zweite Spitzeinheit (19) aufnehmenden Schlitten (23) umfasst, wobei eine der Abstützungen der Tragstruktur (21) eine feste Fixierung des Rahmens (22) an der betreffenden Platte beinhaltet, wohingegen die mindestens eine weitere Abstützung das Rahmens (22) an der zugeordneten Platte als Schiebelager ausgeführt ist,
**dadurch gekennzeichnet,**
**dass** die Linearführung (24) in Richtung der Maschinenachse (X) eine solche Erstreckung aufweist, dass die mindestens eine zweite Spritzeinheit (19) wahlweise in eine an dem ersten Teilwerkzeug (5) oder dem zweiten Teilwerkzeug (6) anliegende Position bringbar ist, wobei weiterhin Mittel zur Lagesicherung der mindestens einen zweiten Spritzeinheit (19) in ihrer an dem ersten oder aber dem zweiten Teilwerkzeug anliegenden Position vorgesehen sind.

2. Spritzgießmaschine nach Anspruch 1, **dadurch gekennzeichnet, dass** die mindestens eine als Schiebelager (27) ausgeführte Abstützung des Rahmens (22) der Tragstruktur (21) an der betreffenden Platte zur Übertragung von quer zur Maschinenachse gerichteten Kräfte ausgeführt ist.

3. Spritzgießmaschine nach Anspruch 1 oder Anspruch 2, **dadurch gekennzeichnet, dass** der Rahmen (22) der Tragstruktur (21) an der ersten Formaufspannplatte (2) fixiert ist.

4. Spritzgießmaschine nach Anspruch 3, **dadurch gekennzeichnet, dass** sie als eine eine Endplatte (4) aufweisende Dreiplattenmaschine ausgeführt ist und sich der Rahmen (22) der Tragstruktur (21) sowohl an der zweiten Formaufspannplatte (3) als auch an der Endplatte (4) abstützt, wobei nur die Abstützung an der zweiten Formaufspannplatte (2) zur Übertragung von quer zur Maschinenachse gerichteten Kräften ausgeführt ist.

5. Spritzgießmaschine nach Anspruch 3, **dadurch gekennzeichnet, dass** sie als eine eine Endplatte aufweisende Dreiplattenmaschine ausgeführt ist und sich der Rahmen (22) der Tragstruktur (21) allein an der Endplatte (4) über ein Schiebelager abstützt, wobei diese Abstützung des Rahmens an der Endplatte zur Übertragung von vertikalen Lasten sowie von quer zur Maschinenachse gerichteten Kräften ausgeführt ist.

6. Spritzgießmaschine nach Anspruch 3, **dadurch gekennzeichnet, dass** sie als eine eine Endplatte aufweisende Dreiplattenmaschine ausgeführt ist und sich der Rahmen (22) der Tragstruktur (21) zur Übertragung vertikaler Lasten entweder nur an der Endplatte (4) oder nur an der zweiten Formaufspannlatte (3) abstützt, wobei diese Abstützung zur Übertragung von quer zur Maschinenachse gerichteten Kräften nicht geeignet ist und an der jeweils anderen Platte eine zur Übertragung von quer zur Maschinenachse gerichteten Kräften geeignete Abstützung erfolgt.

7. Spritzgießmaschine nach Anspruch 1 oder Anspruch 2, **dadurch gekennzeichnet, dass** der Rahmen (22) der Tragstruktur (21) an der zweiten Formaufspannplatte (3) fixiert ist, wobei insbesondere die Abstützung des Rahmens (22) an der ersten Formaufspannplatte (2) als zur Übertragung vertikaler Lasten sowie von quer zur Maschinenachse gerichteten Kräften geeignetes Schiebelager ausgeführt ist.

8. Spritzgießmaschine nach einem der Ansprüche 1 bis 7, **dadurch gekennzeichnet, dass** sich die Linearführung (24) in Richtung weg von der ersten Formaufspannplatte (2) so weit erstreckt, dass die mindestens eine zweite Spritzeinheit (19) in eine oberhalb der Schließeinheit (14) liegende Position bringbar ist.

9. Spritzgießmaschine nach einem der Ansprüche 1 bis 8, **dadurch gekennzeichnet, dass** der Rahmen (22) in Richtung auf die erste Spritzeinheit (18) über die feststehende Formaufspannplatte (2) hinaus übersteht, wobei insbesondere der Überstand des Rahmens (22) auf einer Stützstruktur abgestützt ist, welche sich ihrerseits an einem Maschinengestell oder direkt auf dem Untergrund abstützt.

10. Spritzgießmaschine nach einem der Ansprüche 1 bis 9, **dadurch gekennzeichnet, dass** auf den Schlitten (23) ein eigenständiger, von der Schließeinheit (14) unabhängiger Verfahrantrieb wirkt.

11. Spritzgießmaschine nach einem der Ansprüche 1 bis 10, **dadurch gekennzeichnet, dass** die Achse der mindestens einen zweiten Spritzeinheit (19) mit der Maschinenachse (X) einen Winkel zwischen 0° und 90° einschließt, wobei im Falle einer spitzwinkligen Neigung die Düse (29) der mindestens einen zweiten Spritzeinheit in Richtung auf die erste Formaufspannplatte (2) orientiert ist.

12. Spritzgießmaschine nach einem der Ansprüche 1 bis 10, **dadurch gekennzeichnet, dass** die Achse der mindestens einen zweiten Spritzeinheit (19) mit der Maschinenachse (X) einen Winkel zwischen 0° und 90° einschließt, wobei im Falle einer spitzwinkligen Neigung die Düse (20) der mindestens einen zweiten Spritzeinheit in Richtung weg von der ersten Formaufspannplatte (2) orientiert ist.

13. Spritzgießmaschine nach Anspruch 11 oder Anspruch 12, **dadurch gekennzeichnet, dass** die mindestens eine zweite Spritzeinheit (19) gegenüber der Maschinenachse mit einem Winkel zwischen 20° und 60°, bevorzugt zwischen 30° und 50° geneigt ist.

14. Spritzgießmaschine nach einem der Ansprüche 1 bis 13, **dadurch gekennzeichnet, dass** zwischen der ersten Formaufspannplatte (2) und der zweiten Formaufspannplatte (3) eine längs der Maschinenachse (X) verschiebbare Wendeeinheit (7) oder ein Etagenwerkzeug mit mindestens zwei weiteren Teilwerkzeugen (10) vorgesehen ist, wobei Mittel zur Lagesicherung der mindestens einen zweiten Spritzeinheit (19) in einer mit ihrer Düse (20) an einem der weiteren Teilwerkzeuge (10) anliegenden Position vorgesehen sind.

15. Spritzgießmaschine nach Anspruch 14, **dadurch gekennzeichnet, dass** die Wendeeinheit (7) einen drehbar gelagerten Formhälftenträger und mindestens zwei darauf aufgespannte weitere Teilwerkzeuge (10) umfasst.

16. Spritzgießmaschine nach Anspruch 14, **dadurch gekennzeichnet, dass** die Wendeeinheit (7) einen drehbar gelagerten Werkzeugblock (9) mit mindestens zwei darauf ausgeführten weiteren Teilwerkzeugen (10) umfasst.

17. Spritzgießmaschine nach einem der Ansprüche 14 bis 16, **dadurch gekennzeichnet, dass** auf den Schlitten (23) ein eigenständiger, von dem Verschiebeantrieb (17) der Wendeeinheit (7) unabhängiger Verfahrantrieb wirkt.

18. Spritzgießmaschine nach einem der Ansprüche 14 bis 16, **dadurch gekennzeichnet, dass** die Wendeeinheit (7) und die mindestens eine zweite Spritzeinheit (19) eine mechanisch gekoppelte Einheit bilden, auf die ein gemeinsamer Verfahrantrieb wirkt.

19. Spritzgießmaschine nach einem der Ansprüche 1 bis 18, **dadurch gekennzeichnet, dass** zwei in Tandemanordnung ausgeführte zweite Spritzeinheiten (19) vorgesehen sind.

## Claims

1. An injection moulding machine of two-plate or three-plate design with a first, stationary platen (2) having a first mould tool (5) mounted onto it, and a second platen (3) that is movable along the machine axis (X) and has a second mould tool (6) mounted onto it, a clamping unit (14) acting upon the second platen (3), a first injection unit (18) designed to inject material through a nozzle opening in the first platen (2) into the mould tool (5) mounted onto it, and at least one second injection unit (19) suitable for being displaced along with the movable platen (3), wherein a support structure (21) serving to support the at least one second injection unit (19) comprises a frame (22) braced against the first platen (2), on the one hand, and the second platen (3) and/or an end platen (4), if provided, on the other hand, and comprises a carriage (23) receiving the at least one second injection unit, (19), which carriage is supported such that it is moveable along a linear guide (24) parallel to the machine axis (X), and in which one of the supports of the support structure (21) ensures that the frame (22) is fixed into place relative to the respective plate, whereas the at least one other support of the frame (22) is designed as a sliding bearing on the associated plate, **characterized in that** the linear guide (24) extends in the direction of the machine axis (X) in such a manner that the at least one second injection unit (19) can optionally be brought into positions in which it abuts either the first mould tool (5) or the second mould tool (6), wherein means furthermore are provided for securing the respective positions of the at least one second injection unit (19) in which it abuts either the first or the second mould tool.

2. The injection moulding machine according to Claim 1, **characterized in that** the at least one support of the frame (22) of the support structure (21) on the respective plate, which support is designed as a sliding bearing (27), is designed for transmitting forces oriented transversely to the machine axis.

3. The injection moulding machine according to Claim 1 or 2, **characterized in that** the frame (22) of the support structure (21) is fixed to the first platen (2).

4. The injection moulding machine according to Claim 3, **characterized in that** it is designed as a three-plate machine having an end platen (4) and that the frame (22) of the support structure (21) is supported both on the second platen (3) and on the end platen (4), wherein only the support on the second platen (2) is designed for transmitting forces directed transversely to the machine axis.

5. The injection moulding machine according to Claim 3, **characterized in that** it is designed as a three-plate machine having an end platen and that the frame (22) of the support structure (21) is supported solely on the end platen (4) via a sliding bearing, wherein the support of the frame on the end platen is designed for transmitting vertical forces as well as forces directed transversely to the machine axis.

6. The injection moulding machine according to Claim 3, **characterized in that** it is designed as a three-plate machine having an end platen and that the frame (22) of the support structure (21) is braced either only on the end platen (4) or only on the second platen (3) for transferring vertical loads, wherein this support is not suitable for transmitting forces directed transversely to the machine axis, and a support suitable for transmitting forces directed transversely to the machine axis is implemented at the respective other plate.

7. The injection moulding machine according to Claim 1 or 2, **characterized in that** the frame (22) of the support structure (21) is fixed to the second platen (3), wherein the support of the frame (22) on the first platen (2) specifically is designed as a sliding bearing suitable for transmitting vertical loads as well as forces directed transversely to the machine axis.

8. The injection moulding machine according to any one of Claims 1 to 7, **characterized in that** the linear guide (24) extends in the direction away from the first platen (2) by such a distance that the at least one second injection unit (19) can be moved to a position above the clamping unit (14).

9. The injection moulding machine according to any one of Claims 1 to 8, **characterized in that** the frame (22) protrudes in the direction of the first injection unit (18) beyond the stationary platen (2), wherein the protruding portion of the frame (22) is supported on a support structure, which in turn is supported on a machine rack or directly on the ground below the machine.

10. The injection moulding machine according to any one of Claims 1 to 9, **characterized in that** a discrete drive acts on the carriage (23), which drive is independent of the clamping unit (14).

11. The injection moulding machine according to any one of Claims 1 to 10, **characterized in that** the axis of the at least one second injection unit (19) confines an angle with the machine axis (X) of between 0° and 90°, wherein, in the case of an inclination at an acute angle, the nozzle (29) of the at least one second injection unit is oriented towards the first platen (2) .

12. The injection moulding machine according to any one of Claims 1 to 10, **characterized in that** the axis of the at least one second injection unit (19) confines an angle with the machine axis (X) of between 0° and 90°, wherein, in the case of an inclination at an acute angle, the nozzle (20) of the at least one second injection unit is oriented away from the first platen (2).

13. The injection moulding machine according to Claim 11 or 12, **characterized in that** the at least one second injection unit (19) is inclined at an angle between 20° and 60° relative to the machine axis, preferably at an angle between 30° and 50°.

14. The injection moulding machine according to any one of Claims 1 to 13, **characterized in that** a swivel unit (7) movable along the machine axis (X) or a stack mould having at least two additional mould tools (10) is provided between the first platen (2) and the second platen (3), wherein means are provided for securing the position of the at least one second injection unit (19) in a position in which its nozzle (20) abuts one of the additional mould tools (10).

15. The injection moulding machine according to Claim 14, **characterized in that** the swivel unit (7) comprises a rotatably mounted mould carrier and at least two mould tools (10) mounted on the same.

16. The injection moulding machine according to Claim 14, **characterized in that** the swivel unit (7) comprises a rotatably mounted tool block (9) and at least two mould tools (10) designed on the same.

17. The injection moulding machine according to any one of Claims 14 to 16, **characterized in that** a discrete drive acts upon the carriage (23), which drive is independent of the drive (17) of the swivel unit (7).

18. The injection moulding machine according to any one of claims 14 to 16, **characterized in that** the swivel unit (7) and the at least one second injection unit (19) form a mechanically coupled unit acted upon by a common drive.

19. The injection moulding machine according to any one of claims 1 to 18, **characterized in that** two second injection units (19) designed in a tandem arrangement are provided.

## Revendications

1. Machine de coulage par injection conçue avec deux ou trois plateaux, comprenant un premier plateau porte-moule fixe (2) avec un premier outil partiel (5) monté sur celui-ci, et un deuxième plateau porte-moule (3) déplaçable le long de l'axe de machine (X) avec un deuxième outil partiel (6) monté sur celui-ci, une unité de fermeture (14) agissant sur le deuxième plateau porte-moule (3), une première unité d'injection (18) conçue pour l'injection à travers une percée de buse dans le premier plateau porte-moule (2), dans l'outil partiel (5) monté sur celui-ci, et au moins une deuxième unité d'injection (19) adaptée pour une modification de position conjointe avec le plateau porte-moule mobile (3), dans laquelle une structure de support (21) servant à l'appui de l'au moins une deuxième unité d'injection (19) comporte un cadre (22) s'appuyant d'une part sur le premier plateau porte-moule (2) et d'autre part sur le deuxième plateau porte-moule (3) et/ou sur un éventuel plateau final (4), ainsi qu'un traîneau (23) monté sur celui-ci de manière à pouvoir coulisser le long d'un guidage linéaire (24) parallèlement à l'axe de machine (X) et accueillant l'au moins une deuxième unité d'injection (19), dans laquelle l'un des appuis de la structure de support (21) contient une fixation solide du cadre (22) au plateau correspondant, tandis que l'au moins un autre appui du cadre (22) est conçu comme un logement coulissant sur le plateau correspondant,
**caractérisée en ce que**
- le guidage linéaire (24) présente une telle extension dans la direction de l'axe de machine (X), que l'au moins une deuxième unité d'injection (19) peut être mise au choix dans une position s'appliquant sur le premier outil partiel (5) ou le deuxième outil partiel (6), dans laquelle il est en outre prévu des moyens pour le maintien en position de l'au moins une deuxième unité d'injection (19) dans sa position s'appliquant sur le premier ou sur le deuxième outil partiel.

2. Machine de coulage par injection selon la revendication 1, **caractérisée en ce que** l'au moins un appui du cadre (22) de la structure de support (21) conçu comme un logement coulissant (27) est formé sur le plateau correspondant pour la transmission de forces orientées transversalement à l'axe de machine.

3. Machine de coulage par injection selon la revendication 1 ou la revendication 2, **caractérisée en ce que** le cadre (22) de la structure de support (21) est fixé au premier plateau porte-moule (2).

4. Machine de coulage par injection selon la revendication 3, **caractérisée en ce que** celle-ci est conçue comme une machine à trois plateaux comportant un plateau final (4) et **en ce que** le cadre (22) de la structure de support (21) s'appuie aussi bien sur le deuxième plateau porte-moule (3) que sur le plateau final (4), dans laquelle seul l'appui sur le deuxième plateau porte-moule (2) est conçu pour la transmission de forces orientées transversalement à l'axe de machine.

5. Machine de coulage par injection selon la revendication 3, **caractérisée en ce que** celle-ci est conçue comme une machine à trois plateaux comportant un plateau final, et **en ce que** le cadre (22) de la structure de support (21) s'appuie uniquement sur le plateau final (4) par le biais d'un logement coulissant, dans laquelle cet appui du cadre est conçu sur le plateau final pour la transmission de charges verticales et de forces orientées transversalement à l'axe de machine.

6. Machine de coulage par injection selon la revendication 3, **caractérisée en ce que** celle-ci est conçue comme une machine à trois plateaux comportant un plateau final, et **en ce que** le cadre (22) de la structure de support (21) s'appuie soit uniquement sur le plateau final (4) soit uniquement sur le deuxième plateau porte-moule (3) pour la transmission de charges verticales, dans laquelle cet appui n'est pas adapté à la transmission de forces orientées transversalement à l'axe de machine, et un appui adapté pour la transmission de forces orientées transversalement à l'axe de machine est assuré respectivement sur l'autre plateau.

7. Machine de coulage par injection selon la revendication 1 ou la revendication 2, **caractérisée en ce que** le cadre (22) de la structure de support (21) est fixé au deuxième plateau porte-moule (3), dans laquelle en particulier l'appui du cadre (22) sur le premier plateau porte-moule (2) est conçu comme un logement coulissant adapté à la transmission de charges verticales et de forces orientées transversalement à l'axe de machine.

8. Machine de coulage par injection selon l'une des revendications 1 à 7, **caractérisée en ce que** le guidage linéaire (24) s'étend dans une direction opposée au premier plateau porte-moule (2) si loin que l'au moins une deuxième unité d'injection (19) peut être mise dans une position s'étendant au-dessus de l'unité de fermeture (14).

9. Machine de coulage par injection selon l'une des revendications 1 à 8, **caractérisée en ce que** le cadre (22) fait saillie au-delà du premier plateau porte-moule (2) en direction de la première unité d'injection (18), dans laquelle en particulier le dépassement du cadre (22) s'appuie sur une structure de support s'appuyant quant à elle sur un châssis de machine ou directement sur le sol.

10. Machine de coulage par injection selon l'une des revendications 1 à 9, **caractérisée en ce qu'**un entraînement de coulissement autonome, indépendant de l'unité de fermeture (14), agit sur le traîneau (23).

11. Machine de coulage par injection selon l'une des revendications 1 à 10, **caractérisée en ce que** l'axe de l'au moins une deuxième unité d'injection (19) forme un angle compris entre 0° et 90° avec l'axe de machine (X), dans laquelle la buse (29) de l'au moins une deuxième unité d'injection est orientée vers le premier plateau porte-moule (2) en cas d'inclinaison à angle aigu.

12. Machine de coulage par injection selon l'une des revendications 1 à 10, **caractérisée en ce que** l'axe de l'au moins une deuxième unité d'injection (19) forme un angle compris entre 0° et 90° avec l'axe de machine (X), dans laquelle la buse (20) de l'au moins une deuxième unité d'injection est orientée à distance du premier plateau porte-moule (2) en cas d'inclinaison à angle aigu.

13. Machine de coulage par injection selon la revendication 11 ou la revendication 12, **caractérisée en ce que** l'au moins une deuxième unité d'injection (19) est inclinée avec un angle compris entre 20° et 60°, de préférence entre 30° et 50°, par rapport à l'axe de machine.

14. Machine de coulage par injection selon l'une des revendications 1 à 13, **caractérisée en ce qu'**une unité de retournement (7) déplaçable le long de l'axe de machine (X) ou un moule à étage comprenant au moins deux autres outils partiels (10) est prévu(e) entre le premier plateau porte-moule (2) et le deuxième plateau porte-moule (3), dans laquelle il est prévu des moyens pour le maintien en position de l'au moins une deuxième unité d'injection (19) dans une position s'appliquant avec sa buse (20) sur l'un des autres outils partiels (10).

15. Machine de coulage par injection selon la revendication 14, **caractérisée en ce que** l'unité de retournement (7) comporte un support de moitiés de moule monté de façon rotative et au moins deux autres outils partiels (10) montés sur celui-ci.

16. Machine de coulage par injection selon la revendication 14, **caractérisée en ce que** l'unité de retournement (7) comporte un bloc d'outils (9) monté de façon rotative, avec au moins deux autres outils partiels (10) conçus sur celui-ci.

17. Machine de coulage par injection selon l'une des revendications 14 à 16, **caractérisée en ce qu'**un entraînement de déplacement autonome, indépendant de l'entraînement de coulissement (17) de l'unité de retournement (7), agit sur le traîneau (23).

18. Machine de coulage par injection selon l'une des revendications 14 à 16, **caractérisée en ce que** l'unité de retournement (7) et l'au moins une deuxième unité d'injection (19) forment une unité accouplée mécaniquement, sur laquelle agit un entraînement de déplacement commun.

19. Machine de coulage par injection selon l'une des revendications 1 à 18, **caractérisée en ce qu'**il est prévu deux deuxièmes unités d'injection (19) configurées en tandem.
